(19)

Europäisches
Patentamt
European
Patent Office
Office européen
des brevets

(11) **EP 4 057 205 A1**

(12) **EUROPEAN PATENT APPLICATION**

(43) Date of publication:
**14.09.2022  Bulletin 2022/37**

(21) Application number: **22152214.7**

(22) Date of filing: **19.01.2022**

(51) International Patent Classification (IPC):
**G06Q 30/00** $^{(2012.01)}$     **G06F 40/279** $^{(2020.01)}$

(52) Cooperative Patent Classification (CPC):
**G06Q 30/016; G06N 20/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **09.03.2021  US 202117195890**

(71) Applicant: **Accenture Global Solutions Limited Dublin 4 (IE)**

(72) Inventors:
 • **SRINIVASAN, Madhan Kumar**
   **560035 BENGALURU (IN)**

 • **GAJULA, Kishore Kumar**
   **500089 TELANGANA (IN)**
 • **KHOSLA, Gagan Deep**
   **560076 KARNATAKA (IN)**
 • **SINGH, Kuljeet**
   **411017 MAHARASHTRA (IN)**
 • **PANT, Ashish**
   **560103 BANGALORE (IN)**

(74) Representative: **Boult Wade Tennant LLP Salisbury Square House 8 Salisbury Square London EC4Y 8AP (GB)**

(54) **METHOD AND SYSTEM FOR MACHINE LEARNING BASED USER EXPERIENCE EVALUATION FOR INFORMATION TECHNOLOGY SUPPORT SERVICES**

(57)    Embodiments of this disclosure include a method and system for machine learning based evaluation of user experience on information technology (IT) support service. The method may include obtaining a field data of an IT support service ticket and obtaining a multi-score prediction engine. The method may further include predicting metric scores of a plurality of IT support service metrics for the support service ticket based on the field data by executing the multi-score prediction engine. The method may further include obtaining system-defined weights and user-defined weights for the plurality of service metrics and calculating a support service score for the support service ticket based on the metric scores, the system-defined weights, and the user-defined weights. The method may further include evaluating user experience based on the support service score.

**EP 4 057 205 A1**

# EP 4 057 205 A1

## Description

## Technical Field

This disclosure relates to machine learning based user experience evaluation, in particular, to evaluate user experience for information technology support services.

## Background

Information technology (IT) support services are moving away from traditional service level agreement (SLA) to experience level agreement (XLA). The SLA measures the process or completion of an objective, focusing on the output of the IT support services. The XLA measures the outcome and value, focusing on end-user experience and productivity. Traditionally, IT support services have been measuring themselves on technical metrics such as availability and performance of applications and underlying infrastructure. However, in spite of a satisfactory measurement result of these technical metrics, it does not necessarily warrant good end-user experience. In addition, a customer satisfaction survey sent to an end user immediately after a support service may not accurately and timely reflect the real experience of the end user.

## Summary

This disclosure relates to systems and methods for evaluating user experience on IT support services based on a data set of IT support service tickets.

In one embodiment, a method for evaluating a user experience on IT support services is disclosed. The method may include obtaining a field data of an IT support service ticket via a communications interface and storing the field data in a database. The method may further include obtaining with a processor a multi-score prediction engine by obtaining a training data set of a plurality of historical IT support service tickets, where the training data set includes a first field data for each of the plurality of historical IT support service tickets, and extracting a second field data from the first field data for the historical IT support service ticket. The method may further include applying a decision rule to the first field data and the second field data to obtain metric scores of a plurality of IT support service metrics for the historical IT support service ticket and training a machine learning model based on the first field data, the second field data, and the metric scores to generate the multi-score prediction engine. The method may further include predicting with the processor metric scores of a plurality of IT support service metrics for the IT support service ticket based on the field data by executing the multi-score prediction engine. The method may further include obtaining system-defined weights and user-defined weights for the plurality of IT support service metrics. The method may further include calculating a support service score for the IT support service ticket based on the metric scores, the system-defined weights, and the user-defined weights. The method may further include evaluating the user experience on the support service ticket based on the support service score.

In another embodiment, a method is disclosed for training a machine learning model that assists evaluating a user experience on IT support services. The method may include obtaining and storing in a database a training data set of a plurality of support service tickets, where the training data set may include a first field data for each of the plurality of support service tickets, and extracting with a processor a second field data from the first field data for the IT support service ticket. The method may include obtaining with the processor a decision rule including mappings between metric values of an IT support service metric and metric scores of the IT support service metric, and applying with the processor the decision rule to the first field data and the second field data to obtain metric scores of a plurality of IT support service metrics for the IT support service ticket. The method may further include, for each of the plurality of IT support service metrics, identifying metric fields corresponding to the IT support service metric from the first field data and the second field data, deriving a metric value of the IT support service metric from values of the metric fields, and determining a metric score of the IT support service metric by indexing the metric value of the IT support service metric in the mappings. The method may further include training with the processor a machine learning model based on the first field data, the second field data, and the metric scores to generate a multi-score prediction engine. The multi-score prediction engine may be for predicting metric scores of the plurality of IT support service metrics for an IT support service ticket.

In another embodiment, a system for evaluating user experience on IT support services is disclosed. The system may include a memory having stored thereon executable instructions and a processor in communication with the memory. When executing the instructions, the processor may be configured to obtain a field data of an IT support service ticket. The processor may be further configured to obtain a multi-score prediction engine by obtaining a training data set of a plurality of historical IT support service tickets including a first field data for each of the plurality of historical IT support service tickets, extracting a second field data from the first field data for the historical IT support service ticket, applying a decision rule to the first field data and the second field data to obtain metric scores of a plurality of IT support

2

service metrics for the historical IT support service ticket, and training a machine learning model based on the first field data, the second field data, and the metric scores to generate the multi-score prediction engine. The processor may be further configured to predict metric scores of a plurality of IT support service metrics for the IT support service ticket based on the field data by executing the multi-score prediction engine. The processor may be further configured to obtain system-defined weights and user-defined weights for the plurality of IT support service metrics and calculate a support service score based on the metric scores, the system-defined weights, and the user-defined weights. The processor may be further configured to evaluate a user experience on the support service ticket based on the support service score.

Advantageously, the systems and methods described below may help proactively and accurately evaluate a user experience on IT support services. For example, in lieu of passively receiving user satisfaction surveys from end users, the method may leverage machine-learning based prediction engine to predict metric scores of multiple IT support service metrics with respect to user experience and use the metric scores as input to evaluate user experience. The proactive evaluation may facilitate to expose support service issues leading to poor user experience earlier before the issues massively occur, thereby warranting the productivity of the end users. Also, the user experience evaluation may take into account priorities of the IT support service metrics defined by both the system and the end users. An IT support service metric with higher priority may be assigned a greater weight in evaluating the user experience. In this way, the user experience evaluation may more accurately reflect the gap with the end users expectation on the IT support services.

In addition, the systems and methods described below may help accurately predict metric scores of multiple support IT support service metrics with respect to a user experience. For example, the method may make use of rule-based knowledge of subject matter experts to process the historical IT support service tickets to acquire accurate metric scores for the historical IT support service tickets. The field data of the IT support service tickets and corresponding metric scores may serve as effective training samples for a machine learning model to learn the relationships between the field data of an IT support service ticket and the metric scores of the IT support service ticket.

The above embodiments and other aspects and alternatives of their implementations are explained in greater detail in the drawings, the descriptions, and the claims.

## Brief Description of the Drawings

The present disclosure may be better understood with reference to the following drawings and description. The components in the figures are not necessarily to scale. Moreover, in the figures, like-referenced numerals designate corresponding parts throughout the different views.

FIG. 1 shows an exemplary multiple-layer user experience evaluation stack included in a system.
FIG. 2 shows an exemplary user experience evaluation logic.
FIG. 3 shows an exemplary machine learning model training logic for user experience evaluation .
FIG. 4 shows an exemplary system execution implementation for an evaluation engine layer of the user experience evaluation stack in accordance with an embodiment.
FIG. 5 shows an exemplary pair of predictor field data of an IT support service ticket and metric scores of multiple IT support service metrics for the IT support service ticket.
FIG. 6 shows an exemplary system execution environment for the user experience evaluation stack.

## Detailed Description

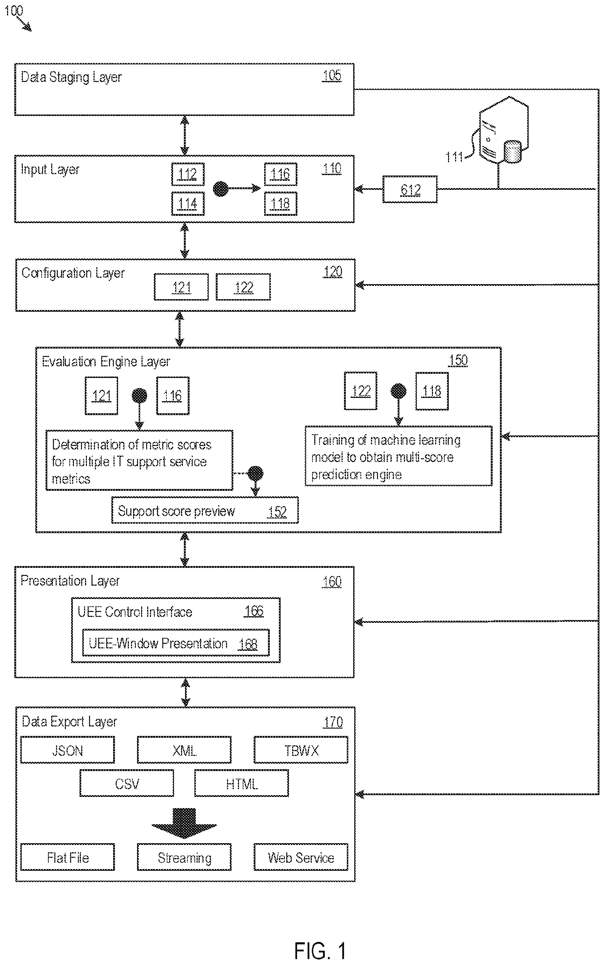

FIG. 1 shows an example multiple layer user experience evaluation (UEE) stack 100. The system described herein uses the UEE stack 100 to evaluate user experience on IT support services based on analysis of data set associated with IT support service tickets. In this example, the UEE stack 100 may include a data staging layer 105, an input layer 110, a configuration layer 120, an evaluation engine layer 150, a presentation layer 160, and a data export layer 170. The UEE stack 100 may include a multiple-layer computing structure of hardware and software that may provide evaluation of user experience on IT support services through IT support service ticket data analysis.

A stack may refer to a multi-layered computer architecture that defines the interaction of software and hardware resources at the multiple layers. The Open Systems Interconnection (OSI) model is an example of a stack-type architecture. The layers of a stack may pass data and hardware resources among themselves to facilitate data processing. As one example, for the UEE stack 100, the data staging layer 105 may provide the input layer 110 with storage resources to store ingested data within a database or other data structure. In some implementations, the data staging layer 105 may be deployed as a cloud-based database platform with the capability to process mass data. In an example, an underlying Big Data Lake of the database platform is capable of ingesting data from heterogeneous data sources such as Secured Storage, Hadoop file systems (HDFS) connections, relational databases, flat files, and other data operations. Hence, the data staging layer 105 may provide a hardware resource, e.g., memory resources, to the input layer 110. Accordingly, the multiple-layer stack architecture of the UEE stack 100 may improve the functioning of the underlying hardware.

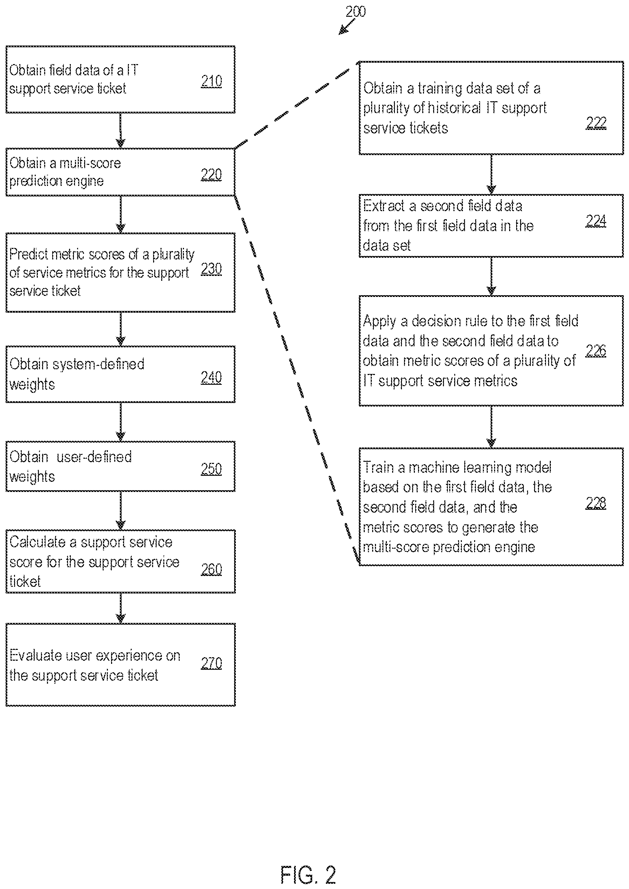

In the following, reference is made to FIG. 1 and the corresponding example UEE logic 200 in FIG. 2. The logical features of the UEE logic 200 may be implemented in various orders and combinations. For example, in a first implementation, one or more features may be omitted or reordered with respect to a second implementation. At the input layer 110 of the UEE stack 100, the UEE logic 200 may obtain field data 112 of an IT support service ticket (210). The IT support service ticket may represent a record created in response to an IT support service request. In some cases, the field data 112 may be received via the communication interface (e.g., communication interfaces 612, discussed below) from data sources 111 such as IT support service ticket files or database. The field data 112 may include raw IT support service ticket data, which may include, for example, multiple predefined fields and corresponding values of the fields. As an example, the field data may include fields for IT support service ticket as illustrated in Table 1.

| Table 1: Example fields for IT support service ticket | | |
|---|---|---|
| IncidentID | HoursToResolve | Severity |
| IncidentType | Source | Categorization |
| AssignedGroup | FCR | Created By |
| IncidentOpenDate | WorkNotes | OpenedBy |
| IncidentClosedDate | CloseNotes | OpenedAt |
| IncidentResolvedDate | Description | ResolvedTime |
| ReOpenedCount | Closedby | OpenMonth_Year |
| Priority | ServiceType | ResolvedMonth_Year |
| ImpactedRegion | ServiceGroup | ResolvedZValue |
| ResolutionSLA | ResponseStatus | SLAValue |

Optionally, at the input layer 110, the UEE logic 200 may pre-process the field data 112. In some implementations, the pre-processing may treat missing value data, remove duplicate fields, converse data type for the field data 112. The UEE logic 200 then may, at the input layer 110, store the pre-processed field data 116 via a memory operation at the data staging layer 105. In some implementations, the pre-processed field data 116 may be indexed to speed up query processing.

At the configuration layer 120, the UEE logic 200 may determine an evaluation interval 121 to evaluate user experience on IT support service tickets. For example, the evaluation interval 121 may be predetermined to be periodical or non-periodical (e.g., hourly, six hours, daily, weekly, and monthly). Additionally or alternatively, the UEE logic 200 may receive the evaluation interval 121 from the input of system operator via a user interface, for example, provided by the presentation layer 160.

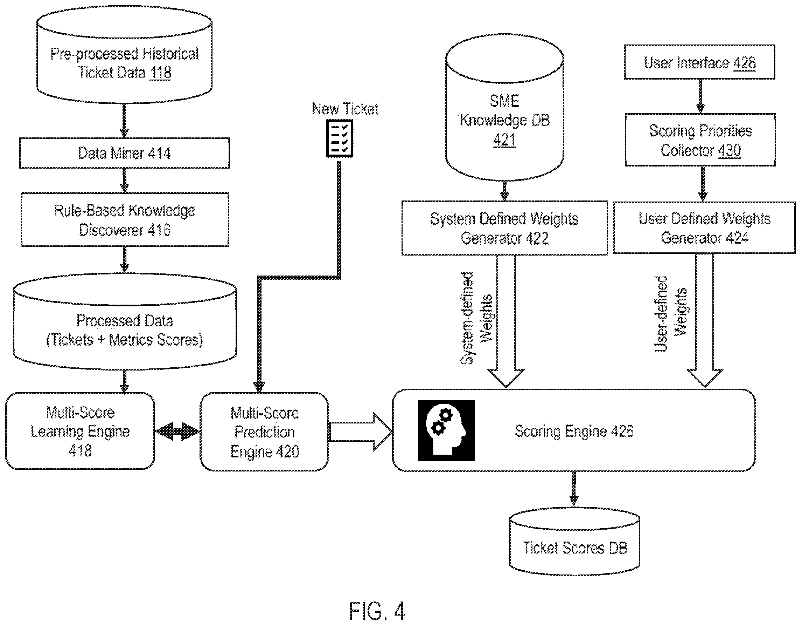

At the evaluation engine layer 150, the UEE logic 200 may analyze the field data 116 of the IT support service ticket to determine user experience on the IT support service. FIG. 4 is a block diagram example of a system 400 illustrating execution implementation for the evaluation engine layer 150 of the UEE stack 100. Example operation of the UEE stack 100 at the evaluation engine layer 150 will be described with reference to the system 400 of FIG. 4, with numerical reference to blocks in the UEE logic in parentheses. The execution of the system 400 may include a multi-score learning engine 418, a multi-score prediction engine 420, a system defined weights generator 422, a user defined weights generator 424, and a scoring engine 426.

At the multi-score learning engine 418, the UEE logic 200 may obtain the multi-score prediction engine 420 (220). For example, the UEE logic 200 may utilize historical support ticket data to train a machine learning (ML) model to generate the multi-score prediction engine 420. In an implementation, the UEE logic 200 may obtain a training data set of a plurality of historical IT support service tickets (222). The training data set may include a first field data for each of the plurality of historical IT support service tickets. Then, the UEE logic 200 my extract a second field data from the first field data for the historical IT support service ticket (224), apply a decision rule to the first field data and the second field data to obtain metric scores of a plurality of IT support service metrics for the historical IT support service ticket (226), and train a machine learning model based on the first field data, the second field data, and the metric scores to generate the multi-score prediction engine 420 (228). The logic of training the machine learning model to generate the multi-score prediction engine 420 will be discussed in detail later.

At the multi-score prediction engine 420, the UEE logic 200 may predict metric scores of a plurality of IT support service metrics for the IT support service ticket based on the field data 116 (230). The IT support service metrics are closely related to measure user experience and may include, but not limited to, first-time-fix (FTF) indicator (or first-call-resolution (FCR) indicator), SLA compliance value, turn-around time, ticket reopen count, and ticket reassignment count. The first-time-fix indicator may indicate whether the issue in the IT support service ticket is fixed when the issue is reported for the first time. The SLA compliance value may indicate the extent to which the IT support service ticket meets the target SLA. The turn-around time may indicate the time length to resolve the issue in the IT support service ticket. The ticket reopen count may represent the times that the IT support service ticket is reopened before the issue in the IT support service ticket is finally resolved. The ticket reassignment count my represent the number of resolvers to which the IT support service ticket is assigned before the issue in the IT support service ticket is finally resolved.

The metric scores of the individual IT support service metrics may indicate the end-user's experience on the support service. Typically, a higher metric score may represent a better user experience. The metric scores may be scaled to a predefined score range, e.g., [1,10] based on values of the IT support service metrics. By way of example, the metric scores may be scaled based on the rules as illustrated in Table 2 below.

| Table 2: Scoring rules for IT support service metrics | |
|---|---|
| First-Time-Fix (FTF) | • FTF is Yes, score = FTF_val1<br>• FTF is No, score = FTF_val2 |
| SLA Compliance | • Within 20% of target SLA, score = sla_val6<br>• Between 20% and 40% of target SLA, score = sla_val5<br>• Between 40% and 60% of target SLA, score = sla_val4<br>• Between 60% and 80% of target SLA, score = sla_val3<br>• Between 80% and 100% target SLA, score = sla_val2<br>• SLA Not Met (> 100%), score = sla_val1 |
| Turn Around Time (TAT) | • Conduct Z Score (or standard deviation score) transform on TAT<br>• Scale the Z scores to the score range [1,10] |
| Ticket reopen count | • Reopen count is 0, score = reopen_val4<br>• Reopen count is 1, score = reopen_val3<br>• Reopen count is 2, score = reopen_val2<br>• Reopen count is >2, score = reopen_val1 |
| Ticket reassignment count | • Re-assign count is 0, score = reassign_val4<br>• Re-assign count is 1, score = reassign_val3<br>• Re-assign count is 2, score = reassign_val2<br>• Re-assign count is >2, score = reassign_val1 |

At the system defined weights generator 422, the UEE logic 200 may obtain system-defined weights of the plurality of IT support service metrics (240). In an implementation, the UEE logic 200 may obtain system-defined priorities of the plurality of IT support service metrics, and generate the system-defined weights based on the system-defined priorities.

The system-defined priorities may be predefined based on the knowledge of subject matter experts (SME) and stored in the SME knowledge database 421. The UEE logic 200 may retrieve the respective system-defined priorities for each of the IT support service metrics. The system-defined priorities may be considered as default priorities of the IT support service metrics. If an IT support service metric has a higher priority, it has more weight in scoring the support service and evaluating the user experience on the support service.

Upon obtaining the system-defined priorities, the UEE logic 200 may generate the system-defined weights for the IT support service metrics based on the system-defined priorities. An IT support service metric with a higher system-defined priority may have a higher system-defined weight. In an example as illustrated in Table 3, the system-defined priorities for five IT support service metrics M1-M5 are SP1-SP5. The system-defined priorities of M1-M5 decreases in sequence, where SP1 is the highest priority and SP5 is the lowest priority. Accordingly, the system-defined weights of the M1-M5 decrease in sequence, i.e., Z>Y>X>V>U.

| Table 3 Mappings between System-defined priority and system-defined weight | | |
|---|---|---|
| **IT support service metrics** | **System-defi ned Priority** | **System-defined Weight** |
| M1 | SP1 | Z |

(continued)

| Table 3 Mappings between System-defined priority and system-defined weight | | |
|---|---|---|
| **IT support service metrics** | **System-defi ned Priority** | **System-defined Weight** |
| M2 | SP2 | Y |
| M3 | SP3 | X |
| M4 | SP4 | V |
| M5 | SP5 | U |

In an example, the system-defined weight may follow a modified Fibonacci sequence pattern. For example,

$$\{U; V = U+U; X = U+V; Y = V + X; Z = X + Y \mid U + V + X + Y + Z + 5\gamma = 100\}$$

where U and $\gamma$ may take real numbers, for example, U is equal to 5 and $\gamma$ is equal to 1. Alternatively, the system-defined weights may be normalized into percentage.

At the user defined weights generator 424, the UEE logic 200 may obtain user-defined weights of the plurality of IT support service metrics (250). In an implementation, the UEE logic 200 may obtain user-defined priorities of the plurality of IT support service metrics, and generate the user-defined weights based on the user-defined priorities. The UEE logic 200 may collect the user-defined priorities from the end users at scoring priorities collector 430 for example via the user interface 428 provided by the presentation layer 160. The user-defined priorities may represent the end-users' view on the significance of individual IT support service metrics.

Then, the UEE logic 200 may generate the user-defined weights for the IT support service metrics based on the user-defined priorities in the way similar to generating the system-defined weights as discussed above. To the extent that some IT support service metrics have the same user-defined priority, the IT support service metrics may be assigned the same user-defined weight. For example, the IT support service metrics M2 and M3 have the same user-defined priority and the user-defined weights for M2 and M3 are Y and X. In this case, the UEE logic 200 may average the user-defined weights for M2 and M3, i.e., Avg(Y, X) and update the user-defined weights for M2 and M3 with the average value. Alternatively, the user-defined weights may be normalized into percentage.

At the scoring engine 426, the UEE logic 200 may calculate a support service score for the IT support service ticket based on the metric scores, the system-defined weights, and the user-defined weights (260). For example, the UEE logic may calculate metric weights of the IT support service metrics based on the system-defined weights and the user-defined weights of the IT support service metrics and calculate the support service score based on the metric scores and metric weights of the IT support service metrics.

In an implementation, for each of IT support service metrics, the UEE logic 200 may determine a coefficient of the system-defined weight and a coefficient of the user-defined weight for the IT support service metric based on a difference between the system-defined weight and the user-defined weight, and calculate a metric weight of the IT support service metric based on the system-defined weight, the user-defined weight, the coefficient of the system-defined weight, and the coefficient the user-defined weight.

Where the absolute difference between the system-defined weight and the user-defined weight for an IT support service metric is less than a predefined threshold T, the UEE logic 200 may assign the same value to the coefficient $\alpha$ of the system-defined weight and the $\beta$ coefficient of the user-defined weight, e.g., $\alpha = \beta = 50\%$. Where the absolute difference between a difference between the system-defined weight and the user-defined weight is greater than the predefined threshold T, the UEE logic 200 may assign a higher value to the coefficient of the user-defined weight than the coefficient of the system-defined weight. When the absolute difference between the system-defined weight and the user-defined weight increases, the UEE logic 200 may increase the coefficient $\beta$ of the user-defined weight and decrease the coefficient $\alpha$ of the system-defined weight. In an example, the UEE logic 200 may calculate the coefficients $\beta$ and $\alpha$ using the Equations 1 and 2 below:

$$\beta = (50\% + ((|SW - UW| - T) / \max (SW, UW))) \qquad \text{Equation 1}$$

$$\alpha = 100\% - \beta \qquad \text{Equation 2}$$

where *SW* represents the system-defined weight, *UW* represents the user-defined weight.

Subsequently, the UEE logic 200 may, for example, calculate a metric weight *P* of the IT support service metric using the Equation 3 below:

$$P = SW * \alpha + UW * \beta \qquad\qquad \text{Equation 3}$$

By way of example, the UEE logic 200 may calculate metric weights for individual IT support service metrics as illustrated in Table 4 below:

| Table 4: Metric weight calculation | | | |
|---|---|---|---|
| IT support service metric | User-defined Weight | System-defined Weight | Metric Weight |
| M1 | UW1 | SW1 | $P1 = SW1 * \alpha 1 + UW1 * \beta 1$ |
| M2 | UW2 | SW2 | $P2 = SW2 * \alpha 2 + UW2 * \beta 2$ |
| M3 | UW3 | SW3 | $P3 = SW3 * \alpha 3 + UW3 * \beta 3$ |
| M4 | UW4 | SW4 | $P4 = SW4 * \alpha 4 + UW4 * \beta 4$ |
| M5 | UW5 | SW5 | $P5 = SW5 * \alpha 5 + UW5 * \beta 5$ |

The UEE logic 200 may calculate the support service score based on the metric scores and metric weights of the IT support service metrics, for example, using Equation 4 below:

$$SC = MS1 * P1 + MS2 * P2 + MS3 * P3 + MS4 * P4 + M5 * P5 \qquad \text{Equation 4}$$

where SC represents the support service score of the IT support service ticket, *MS1-MS5* represents metric scores of the IT support service metrics M1-M5.

For purpose of illustration, the UEE logic 200 may execute the example routines in Table 5 to implement functions of the scoring engine 426.

| Table 5: Example Routine for scoring support service ticket | |
| --- | --- |
| Example Routine | **Algorithm formula:**<br>If (User-defined Priorities == 'Available'):<br>IT Support Service Score =<br>*ReOpened_Count_Score* * (*ReOpened_CounLSys_Wt* * $\alpha$1 +<br>*ReOpened_Count_Usr_Wt* * $\beta$1) +<br>*Reassignment_Score* * (*Reassignment_Sys_Wt* * $\alpha$2 +<br>*Reassignment_Usr_Wt* * $\beta$2) +<br>*SLA_Status_Score* * (*SLA_Status_Sys_Wt* * $\alpha$3 + *SLA_Status_Usr_Wt* * $\beta$3) +<br>*FCR_Score* * (*FCR_Sys_Wt* * $\alpha$4 + *FCR_Usr_Wt* * $\beta$4) +<br>*Resolved_ZValue_Score* * (*Resolved_ZValue_Sys_Wt* * $\alpha$5 +<br>*Resolved_ZValue_Usr_Wt* * $\beta$5)<br>else<br>IT Support Service Score =<br>(*ReOpened_Count_Score* * *ReOpened_Count_Sys_Wt* +<br>*Reassignment_Score* * *Reassignment_Sys_Wt* +<br>*SLA_Status_Score* * *SLA_Status_Sys_Wt* +<br>*FCR_Score* * *FCR_Sys_Wt* +<br>*Resolved_ZValue_Score* * *Resolved_ZValue_Sys_Wt*)<br>where<br>*ReOpened_Count_Score*: metric score of the IT support service metric "ticket reopen count"<br>*ReOpened_Count_Sys_Wt*: system-defined weight of the IT support service metric "ticket reopen count"<br>*ReOpened_Count_Usr_Wt*: user-defined weight of the IT support service metric "ticket reopen count"<br>*Reassignment_Score*: metric score of the IT support service metric "ticket reassignment count"<br>*Reassignment_Sys_Wt*: system-defined weight of the IT support service metric "ticket reassignment count" |
| | *Reassignment_Usr_Wt*: user-defined weight of the IT support service metric "ticket reassignment count"<br>*SLA_Status_Score*: metric score of the IT support service metric "SLA compliance value"<br>*SLA_Status_Sys_Wt*: system-defined weight of the IT support service metric "SLA compliance value"<br>*SLA_Status_Usr_Wt*: user-defined weight of the IT support service metric "SLA compliance value"<br>*FCR_Score*: metric score of the IT support service metric "first-time-fix indicator"<br>*FCR_Sys_Wt*: system-defined weight of the IT support service metric "first-time-fix indicator"<br>*FCR_Usr_Wt*: user-defined weight of the IT support service metric "first-time-fix indicator"<br>*Resolved_ZValue_Score*: metric score of the IT support service metric "turn-around time"<br>*Resolved_ZValue_Sys_Wt*: system-defined weight of the IT support service metric "turn-around time"<br>*Resolved_ZValue_Usr_Wt*: user-defined weight of the IT support service metric "turn-around time" |

Upon obtaining support service scores for mass IT support service tickets, the UEE logic 200 may evaluate user experience on the support service tickets based on the support service scores (270). For example, the UEE logic 200 may sort out the IT support service tickets whose support service scores are lower than a threshold, which may indicate that the user experience on the IT support service tickets is bad. Then, the UEE logic 200 may drill down into the IT support service metrics involved in the calculation of the support service score that most negates the user experience. Additionally or alternatively, the UEE logic 200 may utilize heat-map analysis and/or user flow maps to facilitate to pinpoint reasons for poor user experience on the IT support services. For example, the heat-map analysis may help divide the IT support service tickets into three categories marked with different colors such as red, amber, and green. The IT support service tickets with the support service scores between 7 and 10 may be marked in green. The IT support service tickets with the support service scores between 3 and 7 may be marked in amber. The IT support service tickets with the support service scores less than 3 may be marked in red.

Referring to the presentation layer 160 in FIG. 1, where the UEE logic 200 may access the metric scores and the support service scores for the IT support service tickets, e.g., via data staging layer 105 memory operations to generate a UEE-control interface 166 including a UEE-window presentation 168. The UEE-window presentation 168 may include data related to the evaluation of user experience including the support service score preview 152 for the evaluated IT support service tickets, which may be presented to the end users and support service supervisors.

In some cases, the UEE logic 200 may initiate deployment via the data export layer 170. The data export layer 170 may format the reservation matrix in one or more formats for transfer. For example, the data export layer 170 may support format translation to java script object notation (JSON), extensible markup language (XML), comma separated value (CSV), Tableau Workbook (TBWX), hypertext markup language (HTML) or other formats. The data export layer 170 may also support transfer of the metric scores and the support service scores of support service tickets in one or more states, such as flat file transfers, streaming transfers, web service access, internet protocol transfers, or other transfers. Additionally or alternatively, the UEE logic 200 may initiate deployment via the evaluation engine layer 150 through direct transfer, direct network access, or other non-export transfer.

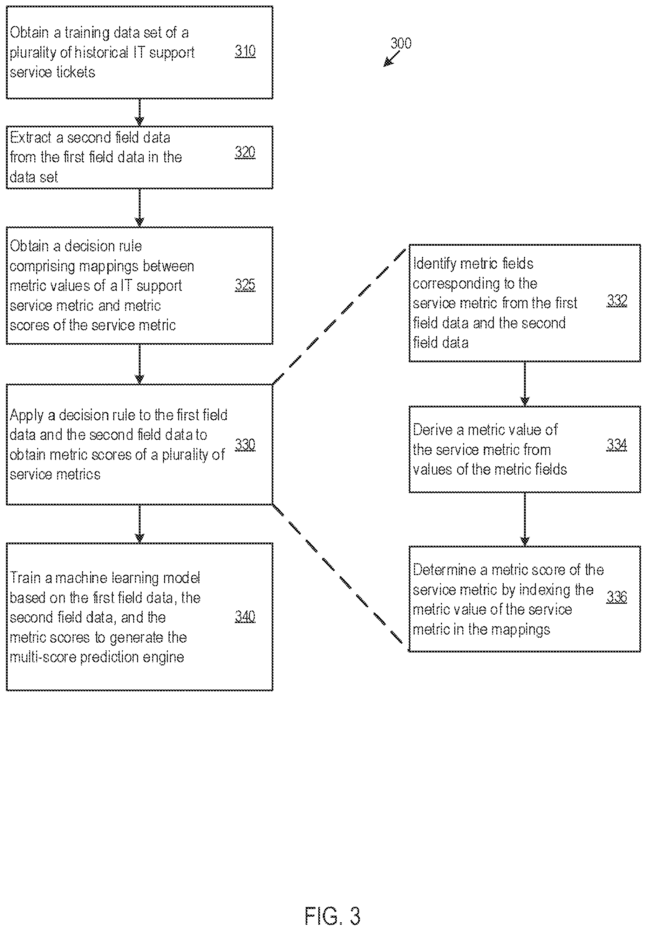

Now the learning logic 300 for training a machine learning model to generate the multi-score prediction engine will be described with reference to FIG. 1 and FIG. 3, with the numerical reference to the blocks of the learning logic in parentheses. At the input layer 110 of the UEE stack 100, the learning logic 300 may obtain training data set 114 of historical IT support service tickets (310). In some cases, the training data set 114 may be accessed at least in part, e.g., via the communication interfaces 612, from the data sources 111. The training data set 112 may include a first field data of the historical IT support service tickets and associated user experience key performance indicator (KPI) matrix data including constraints, parameters, relationships and reference values. The first field data may include raw support service ticket data, which may include, for example, multiple predefined fields and corresponding values of the fields.

Optionally, at the input layer 110, the learning logic 300 may pre-process the training data set 114. In some implementations, the pre-processing may treat missing value data, remove duplicate fields, converse data type for the training data set 114. Additionally or alternatively, the learning logic 300 may randomize data in the training data set 114 to eliminate effects of the order in which the data is collected. For example, the data randomization may shuffle the training data set 114 to change the storage order of data in the training data set 114. The learning logic 300 then may, at the input layer 110, store the pre-processed training data set 118 via a memory operation at the data staging layer 105.

At the configuration layer 120, the learning logic 300 may obtain various selection parameters 122 for selecting the historical IT support service tickets to be used in training the machine learning model. The selection parameters may include, for example, the number of tickets, the specific fields in the tickets, the end users, the geo-location, and the time period. The parameters may be predefined in the system. Additionally or alternatively, the learning logic 300 may receive values of the parameters from system operator via user interface.

At the evaluation engine layer 150, the learning logic 300 may train machine learning model based on the selected historical IT support service tickets to generate the multi-score prediction engine (320), which will be described with reference to the system 400 of FIG. 4. The execution of the system 400 may further include a data miner 414 and a rule based knowledge discoverer 416.

At the data miner 414, the learning logic 300 may extract additional field data, i.e., a second field data from the first field data for the IT support service tickets (320). In an implementation, the learning logic 300 may aggregate a plurality of fields in the first field data to obtain an additional field. For example, the first field data may include fields "TicketDescription" and "AssignedGroup." The value of the field "TicketDescription" is "workplace access issue" and the value of the field "AssignedGroup" is "Global Service Desk." Then, the learning logic 300 may extract a new additional field "Calc_DrilldownTag" by aggregating the values of the fields "TicketDescription" and "AssignedGroup" such that the value of the field "Calc_DrilldownTag" may be "Service Desk Access." In another implementation, the learning logic 300 may evaluate the process parameters in the first field data to obtain an additional field.

At the rule based knowledge discoverer 416, the learning logic 300 may obtain a decision rule including mappings between metric values of an IT support service metric and metric scores of the IT support service metric (325). The decision rule may be accessed at least in part, e.g., via the communication interfaces 612, from the data sources 111, which may include a decision rule knowledge database 421. The exemplary mappings between the metric values and metric scores for the IT support service metrics are illustrated in Table 6. In an example, the mappings may be obtained from inputs of SME.

| Table 6: Exemplary mappings between metric values and metric scores | | |
|---|---|---|
| **IT support service metric** | **Metric Value** | **Metric Score** |
| Ticket reopen count | 0 | 10 |
| | 1 | 6 |
| | 2 | 3 |
| | Infinite | 1 |
| Ticket reassignment count | 0 | 10 |
| | 1 | 9 |
| | 2 | 6 |
| | Infinite | 1 |
| SLA compliance value | 20 | 10 |
| | 40 | 9 |
| | 60 | 8 |
| | 80 | 7 |
| | Infinite | 6 |
| First-time-fix indicator | Yes | 10 |
| | FCR_SLA_NotMet | 5 |
| | No | 1 |
| Turn-around time | -2 | 10 |
| | -1.5 | 9 |
| | -0.8 | 8 |
| | -0.3 | 7 |
| | 0 | 6 |
| | 0.3 | 5 |
| | 0.8 | 4 |
| | 1.5 | 3 |
| | 2 | 2 |
| | Infinite | 1 |

Then, the learning logic 300 may apply the decision rule to the first field data and the second field data to obtain metric scores of a plurality of IT support service metrics for the IT support service ticket. In an implementation, for each of the IT support service metrics, the learning logic 300 may identify metric fields corresponding to the IT support service metric from the first field data and the second field data (332), derive a metric value of the IT support service metric from values of the metric fields (334), and determine a metric score of the IT support service metric by indexing the metric value of the IT support service metric in the mappings (336).

For example, the learning logic 300 may identify the fields *"resolvedTime"* and *"SLAHours"* from the first field data and the second field data for the IT support service metric of SLA compliance value, i.e., *"SLAValue"* based on the predefined association between the fields and the IT support service metric. Then, the learning logic 300 may derive a metric value of the IT support service metric "SLAValue" from values of the metric fields "resolvedTime" and "SLAHours," for example, using the Equation 5 below.

$$SLAValue = 100 * ResolvedTime/SLAHours \qquad\qquad \text{Equation 5}$$

When the metric value of the IT support service metric *"SLAValue"* is derived, the learning logic 300 may use the metric value as index to search for the entry corresponding to the IT support service metric of SLA compliance value and the metric value to find the corresponding metric score. For example, the metric value of the IT support service metric SLA compliance value is 80, the learning logic 300 may determine the metric score of the IT support service metric SLA compliance value for the IT support service ticket is 7 as shown in Table 6.

At the multi-score learning engine 418, the learning logic 300 may train a machine learning model based on the first field data, the second field data, and the metric scores to generate the multi-score prediction engine 420 (340). In an implementation, the learning logic 300 may pair the first and second field data of an IT support service ticket with the metric scores of the IT support service ticket and input the paired data as training sample to the machine learning model.

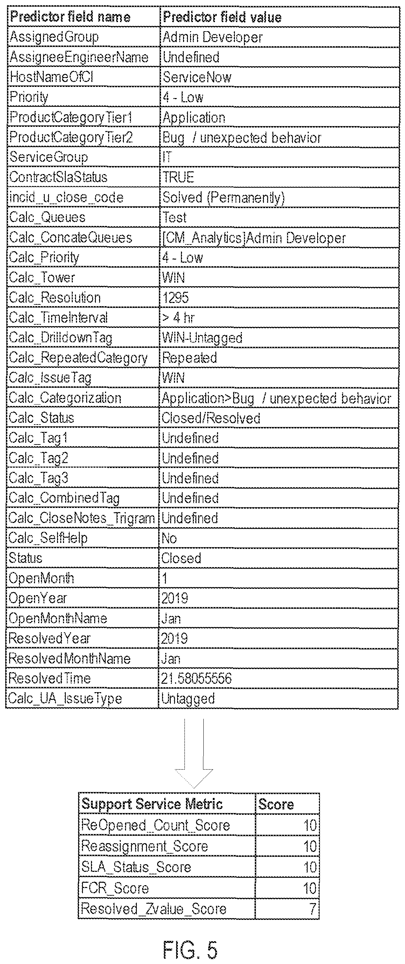

Optionally, the learning logic 300 may select predictor field data from the first field data and the second field data based on variability of the first field data and the second field data among the IT support service tickets. For example, where the variance of values for a specific field among the IT support service tickets is less than a predefined range, it may suggest that the specific field fails to contribute to the learning process of the machine learning model because it cannot assist to distinct the IT support service tickets. Thus, the learning logic 300 may exclude the specific field from the predictor field data. Accordingly, the learning logic 300 may pair the predictor field data of the IT support service ticket with the metric scores of the IT support service ticket as illustrated in FIG. 5 and input the paired data as training sample to the machine learning model.

In an implementation, the learning logic 300 may utilize a gradient boosting model as the machine learning model for training. The gradient boosting is a machine learning technique for regression and classification problems, which produces a prediction model in the form of an ensemble of weak prediction models, typically decision trees. One example of the gradient boosting model is Extreme Gradient Boosting (XGBoost) as illustrated in ML Model 1.

$$\text{Model} = \text{XGBoost}\ (x1, x2, \ldots, xn;\ y1, y2, y3, y4, y5) \qquad \text{ML Model 1}$$

Input: x1, x2, ..., xn are the field data vector for an IT support service ticket, e.g., assigned group, assignee engineer name, priority, etc.

Output: y1, y2, y3, y4, and y5 are the target vector for the multi-value supervised regression model, e.g., ReOpened_Count_Score, Reassignment_Score, SLA_Status_Score, FCR_Score, and Resolved_ZValue_Score.

The XGBoost may include desirable features such as clever penalization of trees, proportional shrinking of leaf nodes, newton boosting, and extra randomization parameter. In the initial training, the learning logic 300 may, for example, select a relatively high learning rate, e.g., 0.1 and select 4-6 parameters to define a tree. When addressing highly imbalanced class problem that may occur in IT support service tickets, the learning logic 300 may select smaller child weight, e.g., 1.

Optionally, the learning logic 300 may split the obtained data set of historical IT support service tickets into a training data set and an evaluation data set based on data characteristics of the data set. The training data set is used to train the machine learning model while the evaluation data set is used to evaluate performance of the machine learning model. The data characteristics of the data set may include, for example, domain, data availability, and data set particulars. In machine learning art, the Vapnik-Chervonenkis (VC) dimensions may indicate a lower bound on the minimal number of training samples required to learn a concept approximately correctly. In an example, the ticket samples in the training data set may be set as 10 times the number of VC dimensions. Where the data set of the historical IT support service tickets are sufficient, more ticket data may be split to the evaluation data set. In an example, the ratio of the training data set to the evaluation data set is 80:20. Also, the learning logic 300 may split the historical IT support service tickets such that the training data set may include the tickets covering all data value ranges for individual ticket fields.

Optionally, the learning logic 300 may evaluate a prediction accuracy of the machine learning model based on the evaluation data set. Where the prediction accuracy is lower than an accuracy threshold, the learning logic 300 may optimize the machine learning model by tuning hyper-parameters of the machine learning model. The hyper-parameter may represent a parameter whose value is used to control the machine learning process. Examples of hyper-parameters may include number of training steps, learning rate, initialization values and distribution.

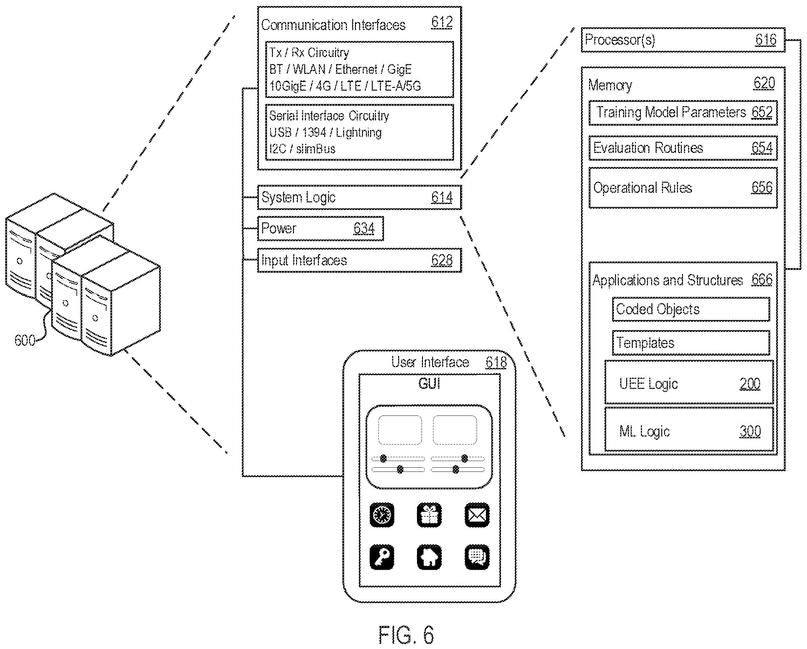

FIG. 6 shows an example system execution environment 600 for the UEE stack 100 described above. The execution environment 600 may include system logic 614 to support execution of the multiple layers of UEE stack 100 described above. The system logic may include processors 616, memory 620, and/or other circuitry.

The memory 620 may include training model parameters 652, evaluation routines 654, and operational rules 656. The memory 620 may further include applications and structures 666, for example, coded objects, machine instructions, templates, or other structures to support pre-processing the IT support service ticket data, training a machine learning model to obtain multi-score prediction engine, predicting metric scores of multiple IT support service metrics, evaluating user experience on the IT support services, or other tasks described above. The applications and structures may implement the UEE logic 200 and the learning logic 300.

The execution environment 600 may also include communication interfaces 612, which may support wireless, e.g. Bluetooth, Wi-Fi, WLAN, cellular (4G, LTE/A, 5G), and/or wired, Ethernet, Gigabit Ethernet, optical networking protocols. The communication interfaces 612 may also include serial interfaces, such as universal serial bus (USB), serial ATA, IEEE 1394, lighting port, I2C, slimBus, or other serial interfaces. The communication interfaces 612 may be used to support and/or implement remote operation of the UEE-control interface 166. The execution environment 600 may include power functions 634 and various input interfaces 628. The execution environment may also include a user interface 618 that may include human-to-machine interface devices and/or graphical user interfaces (GUI). The user interface 618 may be used to support and/or implement local operation of the UEE-control interface 166. In various implementations, the system logic 614 may be distributed over one or more physical servers, be implemented as one or more virtual machines, be implemented in container environments such as Cloud Foundry or Docker, and/or be implemented in Serverless (functions as-a-Service) environments.

In some cases, the execution environment 600 may be a specially defined computational system deployed in a cloud platform. In some cases, the parameters defining the execution environment may be specified in a manifest for cloud deployment. The manifest may be used by an operator to requisition cloud based hardware resources, and then deploy the software components, for example, the UEE stack 100, of the execution environment onto the hardware resources. In some cases, a manifest may be stored as a preference file such as a YAML (yet another mark-up language), JSON, or other preference file type. Additionally or alternatively, the manifest may include custom scripts to implement the UEE stack 100 in a serverless environment.

The methods, devices, processing, circuitry, and logic described above may be implemented in many different ways and in many different combinations of hardware and software. For example, all or parts of the system, including the network interface circuitry and the optimization circuitry, may be circuitry that includes an instruction processor, such as a Central Processing Unit (CPU), microcontroller, or a microprocessor; or as an Application Specific Integrated Circuit (ASIC), Programmable Logic Device (PLD), or Field Programmable Gate Array (FPGA); or as circuitry that includes discrete logic or other circuit components, including analog circuit components, digital circuit components or both; or any combination thereof. The circuitry may include discrete interconnected hardware components or may be combined on a single integrated circuit die, distributed among multiple integrated circuit dies, or implemented in a Multiple Chip Module (MCM) of multiple integrated circuit dies in a common package, as examples.

Accordingly, the circuitry may store or access instructions for execution, or may implement its functionality in hardware alone. The instructions may be stored in a tangible database service medium that is other than a transitory signal, such as a flash memory, a Random Access Memory (RAM), a Read Only Memory (ROM), an Erasable Programmable Read Only Memory (EPROM); or on a magnetic or optical disc, such as a Compact Disc Read Only Memory (CDROM), Hard Disk Drive (HDD), or other magnetic or optical disk; or in or on another machine-readable medium. A product, such as a computer program product, may include a database service medium and instructions stored in or on the medium, and the instructions when executed by the circuitry in a device may cause the device to implement any of the processing described above or illustrated in the drawings.

Implementations of the system may be distributed. For instance, the circuitry may include multiple distinct system components, such as multiple processors and memories, and may span multiple distributed processing systems. Parameters, databases, and other data structures may be separately stored and managed, may be incorporated into a single memory or database, may be logically and physically organized in many different ways, and may be implemented in many different ways. Example implementations include linked lists, program variables, hash tables, arrays, records (e.g., database records), objects, and implicit storage mechanisms. Instructions may form parts (e.g., subroutines or other code sections) of a single program, may form multiple separate programs, may be distributed across multiple memories and processors, and may be implemented in many different ways. Example implementations include stand-alone programs, and as part of a library, such as a shared library like a Dynamic Link Library (DLL). The library, for example, may contain shared data and one or more shared programs that include instructions that perform any of the processing described above or illustrated in the drawings, when executed by the circuitry.

**Claims**

1. A method comprising:

obtaining a field data of an information technology (IT) support service ticket via a communications interface and storing the field data in a database;
obtaining with a processor a multi-score prediction engine by:

obtaining a training data set of a plurality of historical IT support service tickets, the training data set comprising a first field data for each of the plurality of historical IT support service tickets;

extracting a second field data from the first field data for the historical IT support service ticket;

applying a decision rule to the first field data and the second field data to obtain metric scores of a plurality of IT support service metrics for the historical IT support service ticket; and

training a machine learning model based on the first field data, the second field data, and the metric scores to generate the multi-score prediction engine;

predicting with the processor metric scores of a plurality of IT support service metrics for the IT support service ticket based on the field data by executing the multi-score prediction engine;

obtaining system-defined weights and user-defined weights for the plurality of IT support service metrics;

calculating a support service score for the IT support service ticket based on the metric scores, the system-defined weights, and the user-defined weights; and

evaluating user experience on the support service ticket based on the support service score.

2. The method of claim 1, wherein obtaining the system-defined weights for the plurality of IT support service metrics comprises:

obtaining system-defined priorities of the plurality of IT support service metrics; and

generating the system-defined weights based on the system-defined priorities, an IT support service metric with a higher system-defined priority having a higher system-defined weight;

wherein, optionally, the system-defined weights follow a Fibonacci sequence pattern.

3. The method of claim 1 or 2, wherein obtaining the user-defined weights for the plurality of IT support service metrics comprises:

obtaining user-defined priorities of the plurality of IT support service metrics; and

generating the user-defined weights based on the user-defined priorities, the IT support service metrics with a same user-defined priority having a same user-defined weight.

4. The method of any one of claims 1 to 3, wherein calculating the support service score based on the metric scores, the system-defined weights, and the user-defined weights comprises:

for each of the plurality of IT support service metrics,

determining a coefficient of the system-defined weight and a coefficient of the user-defined weight for the IT support service metric based on a difference between the system-defined weight and the user-defined weight, and

calculating a metric weight of the IT support service metric based on the system-defined weight, the user-defined weight, the coefficient of the system-defined weight, and the coefficient the user-defined weight; and

calculating the support service score based on the metric scores and metric weights of the IT support service metrics.

5. The method of claim 4, wherein determining the coefficient of the system-defined weight and the coefficient of the user-defined weight for the IT support service metric comprises:

in response to a difference between the system-defined weight and the user-defined weight is less than a predefined threshold, assigning a same value to the coefficient of the system-defined weight and the coefficient of the user-defined weight.

6. The method of claim 4 or 5, wherein determining the coefficient of the system-defined weight and the coefficient of the user-defined weight for the IT support service metric comprises:

in response to the difference between the system-defined weight and the user-defined weight is greater than the predefined threshold, assigning a higher value to the coefficient of the user-defined weight than the coefficient of the system-defined weight.

7. The method of claim 6, further comprising:

in response to the difference between the system-defined weight and the user-defined weight increasing, increasing the coefficient of the user-defined weight and decreasing the coefficient of the system-defined weight.

8. The method of any one of claims 1 to 7, wherein the decision rule comprises mappings between metric values of an IT support service metric and metric scores of the IT support service metric, applying the decision rule to the first field data and the second field data to obtain the metric scores of the plurality of IT support service metrics comprising:

for each of the plurality of IT support service metrics,

identifying one or more metric fields corresponding to the IT support service metric from the first field data and the second field data,
deriving a metric value of the IT support service metric from values of the one or more metric fields, and
determining a metric score of the IT support service metric by indexing the metric value of the IT support service metric in the mappings.

9. A method comprising:

obtaining and storing in a database a training data set of a plurality of information technology (IT) support service tickets, the training data set comprising a first field data for each of the plurality of IT support service tickets;
extracting with a processor a second field data from the first field data for the IT support service ticket;
obtaining with the processor a decision rule comprising mappings between metric values of an IT support service metric and metric scores of the IT support service metric;
applying with the processor the decision rule to the first field data and the second field data to obtain metric scores of a plurality of IT support service metrics for the IT support service ticket by:

for each of the plurality of IT support service metrics,

identifying metric fields corresponding to the IT support service metric from the first field data and the second field data,
deriving a metric value of the IT support service metric from values of the metric fields, and
determining a metric score of the IT support service metric by indexing the metric value of the IT support service metric in the mappings; and

training with the processor a machine learning model based on the first field data, the second field data, and the metric scores to generate a multi-score prediction engine, the multi-score prediction engine being for predicting metric scores of the plurality of IT support service metrics for an IT support service ticket.

10. The method of claim 9, further comprising:

selecting predictor field data from the first field data and the second field data based on variability of the first field data and the second field data among the plurality of IT support service tickets; and
wherein training the machine learning model comprises:

training the machine learning model based on the predictor field data and the metric scores to obtain the multi-score prediction engine.

11. The method of claim 9 or 10, wherein the machine learning model is an extreme gradient boosting model.

12. The method of any one of claims 9 to 11, further comprising:

evaluating a prediction accuracy of the machine learning model; and
in response to the prediction accuracy being lower than an accuracy threshold, optimizing the machine learning model by tuning hyper-parameters of the machine learning model.

13. The method of any one of claims 9 to 12, further comprising:

obtaining a data set of historical IT support service tickets; and
splitting the data set into a training data set and an evaluation data set based on data characteristics of the data set, the evaluation data set being for evaluating performance of the machine learning model.

14. The method of any one of claims 9 to 13, wherein the plurality of IT support service metrics comprise first-time-fix indicator, service level agreement compliance value, turn-around time, ticket reopen count, or ticket reassignment count.

15. A system, comprising:

a memory having stored thereon executable instructions;
a processor in communication with the memory, the processor when executing the instructions configured to carry out the method of any one of the preceding claims.

100

Data Staging Layer                                                                    105

Input Layer                    112          116                       110
                               114          118

                                                                        612

                                                                    111

Configuration Layer            121          122                      120

Evaluation Engine Layer                                                         150

        121          116                        122          118

Determination of metric scores                  Training of machine learning
for multiple IT support service                 model to obtain multi-score
metrics                                          prediction engine

                     Support score preview      152

Presentation Layer                                                     160

    UEE Control Interface              166

        UEE-Window Presentation    168

Data Export Layer                                                      170

    JSON              XML              TBWX

        CSV                HTML

    Flat File        Streaming        Web Service

FIG. 1

200

| Obtain field data of a IT support service ticket | 210 |

↓

| Obtain a multi-score prediction engine | 220 |

↓

| Predict metric scores of a plurality of service metrics for the support service ticket | 230 |

↓

| Obtain system-defined weights | 240 |

↓

| Obtain user-defined weights | 250 |

↓

| Calculate a support service score for the support service ticket | 260 |

↓

| Evaluate user experience on the support service ticket | 270 |

| Obtain a training data set of a plurality of historical IT support service tickets | 222 |

↓

| Extract a second field data from the first field data in the data set | 224 |

↓

| Apply a decision rule to the first field data and the second field data to obtain metric scores of a plurality of IT support service metrics | 226 |

↓

| Train a machine learning model based on the first field data, the second field data, and the metric scores to generate the multi-score prediction engine | 228 |

FIG. 2

Obtain a training data set of a plurality of historical IT support service tickets    310

Extract a second field data from the first field data in the data set    320

Obtain a decision rule comprising mappings between metric values of a IT support service metric and metric scores of the service metric    325

Apply a decision rule to the first field data and the second field data to obtain metric scores of a plurality of service metrics    330

Train a machine learning model based on the first field data, the second field data, and the metric scores to generate the multi-score prediction engine    340

300

Identify metric fields corresponding to the service metric from the first field data and the second field data    332

Derive a metric value of the service metric from values of the metric fields    334

Determine a metric score of the service metric by indexing the metric value of the service metric in the mappings    336

FIG. 3

FIG. 4

| Predictor field name | Predictor field value |
|---|---|
| AssignedGroup | Admin Developer |
| AssigneeEngineerName | Undefined |
| HostNameOfCI | ServiceNow |
| Priority | 4 - Low |
| ProductCategoryTier1 | Application |
| ProductCategoryTier2 | Bug / unexpected behavior |
| ServiceGroup | IT |
| ContractSlaStatus | TRUE |
| incid_u_close_code | Solved (Permanently) |
| Calc_Queues | Test |
| Calc_ConcateQueues | [CM_Analytics]Admin Developer |
| Calc_Priority | 4 - Low |
| Calc_Tower | WIN |
| Calc_Resolution | 1295 |
| Calc_TimeInterval | > 4 hr |
| Calc_DrilldownTag | WIN-Untagged |
| Calc_RepeatedCategory | Repeated |
| Calc_IssueTag | WIN |
| Calc_Categorization | Application>Bug / unexpected behavior |
| Calc_Status | Closed/Resolved |
| Calc_Tag1 | Undefined |
| Calc_Tag2 | Undefined |
| Calc_Tag3 | Undefined |
| Calc_CombinedTag | Undefined |
| Calc_CloseNotes_Trigram | Undefined |
| Calc_SelfHelp | No |
| Status | Closed |
| OpenMonth | 1 |
| OpenYear | 2019 |
| OpenMonthName | Jan |
| ResolvedYear | 2019 |
| ResolvedMonthName | Jan |
| ResolvedTime | 21.58055556 |
| Calc_UA_IssueType | Untagged |

| Support Service Metric | Score |
|---|---|
| ReOpened_Count_Score | 10 |
| Reassignment_Score | 10 |
| SLA_Status_Score | 10 |
| FCR_Score | 10 |
| Resolved_Zvalue_Score | 7 |

FIG. 5

FIG. 6

EP 4 057 205 A1

Europäisches
Patentamt

European
Patent Office

Office européen
des brevets

# EUROPEAN SEARCH REPORT

Application Number

EP 22 15 2214

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 438 212 B1 (JILANI ABDUL KHADER [IN] ET AL) 8 October 2019 (2019-10-08) <br> * abstract; claim 1; figures 2,10 * <br> * column 3, line 52 - column 5, line 8 * <br> * column 6, line 19 - line 37 * <br> * column 7, line 11 - line 26 * <br> * column 1, line 13 - line 36 * | 1-15 | INV. <br> G06Q30/00 <br> G06F40/279 |
| A | ALBERTO LIMA ET AL: "Capturing the Quality and Business Value of IT Services Using a Business-Driven Model", IEEE TRANSACTIONS ON NETWORK AND SERVICE MANAGEMENT, IEEE, US, vol. 9, no. 4, 1 December 2012 (2012-12-01), pages 421-432, XP011476008, ISSN: 1932-4537, DOI: 10.1109/TNSM.2011.081512.120272 <br> * page 428 * | 1-15 | |
| E | US 2022/044254 A1 (DIXIT ARCHANA [IN] ET AL) 10 February 2022 (2022-02-10) <br> * the whole document * | 1-15 | TECHNICAL FIELDS SEARCHED (IPC) <br><br> G06Q <br> G06N <br> G06F |

The present search report has been drawn up for all claims

| Place of search | Date of completion of the search | Examiner |
|---|---|---|
| Munich | 4 July 2022 | Gardiner, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 22 15 2214

04-07-2022

| Patent document cited in search report | Publication date | Patent family member(s) | Publication date |
|---|---|---|---|
| US 10438212      B1 | 08-10-2019 | NONE | |
| US 2022044254    A1 | 10-02-2022 | NONE | |

EPO FORM P0459